# EUROPÄISCHE PATENTSCHRIFT

(11) **EP 1 153 537 B1**
(45) Veröffentlichungstag und Bekanntmachung des Hinweises auf die Patenterteilung: **26.01.2005**
(21) Anmeldenummer: 01109828.2
(22) Anmeldetag: 21.04.2001
(51) Int. Cl.: A01D 41/12

(54) **Abstützeinrichtung eines Entladerohrs**
Support device for a discharge pipe
Dispositif support pour tube de vidange

(30) Priorität: 09.05.2000 US 566607
(43) Veröffentlichungstag der Anmeldung: 14.11.2001
(73) Patentinhaber: DEERE & COMPANY, Moline, Illinois 61265-8098 (US)
(72) Erfinder: Signer, Todd Neil, East Moline, IL 61244 (US); Cain, Darryl Francis, Moline, IL 61265 (US)
(74) Vertreter: Holst, Sönke, Dr.

(56) Entgegenhaltungen:
- DE-A- 19 606 730
- FR-A- 2 356 355

## Beschreibung

Die Erfindung betrifft eine Abstützeinrichtung eines Entladerohrs eines Fahrzeugs, insbesondere Mähdreschers; wobei das Fahrzeug einen Kornbehälter und ein Entladerohr aufweist, das einen mit dem Kornbehälter in Wirkverbindung stehenden, zumindest etwa vertikal orientierten unteren Abschnitt und einen mit einem oberen Bereich des unteren Abschnitts in Wirkverbindung stehenden oberen Abschnitt umfasst, wobei das Entladerohr um die Längsachse des unteren Abschnitts schwenkbar und die Abstützeinrichtung zwischen dem Fahrzeug und dem oberen Bereich des unteren Abschnitts vorgesehen ist, wie aus dem Dokument DE 196 06 730 A bekannt.

Es ist bekannt, landwirtschaftliche Fahrzeuge, wie Mähdrescher, mit einem Behälter auszustatten, um vom Mähdrescher geerntetes und gedroschenes Korn zeitweise zu speichern. Mit diesen Behältern stehen Entladerohre in Wirkverbindung, durch die das Korn aus dem Behälter bei Endladevorgängen hindurchfließt. In der Regel ist ein Schneckenförderer innerhalb des Entladerohrs angeordnet, um das Korn aus dem Behälter und durch das Entladerohr zu fördern. Wenn Korn aus dem Kornbehälter auf diese Weise durch das Entladerohr herausgefördert wird, wird es auf einen Anhänger oder Lastwagen, der neben dem Mähdrescher fährt, ausgestoßen.

Viele konventionelle Entladerohre umfassen einen im Wesentlichen vertikalen unteren Abschnitt, der mit einem unteren Abschnitt des Kornbehälters des Mähdreschers in Wirkverbindung steht und sich von ihm nach oben erstreckt. Ein oberer Abschnitt des Entladerohrs erstreckt sich im Wesentlichen horizontal und steht mit dem oberen Endabschnitt des vertikalen Abschnitts in Wirkverbindung. Typischerweise sind Schneckenförderer innerhalb des unteren und oberen Abschnitts des Entladerohrs angeordnet. Ein Getriebe ist an der Verbindungsstelle des unteren und oberen Abschnitts des Entladerohrs bereitgestellt, um die Abschnitte des Schneckenförderers in den beiden Abschnitten des Entladerohrs betriebsmäßig zu verbinden.

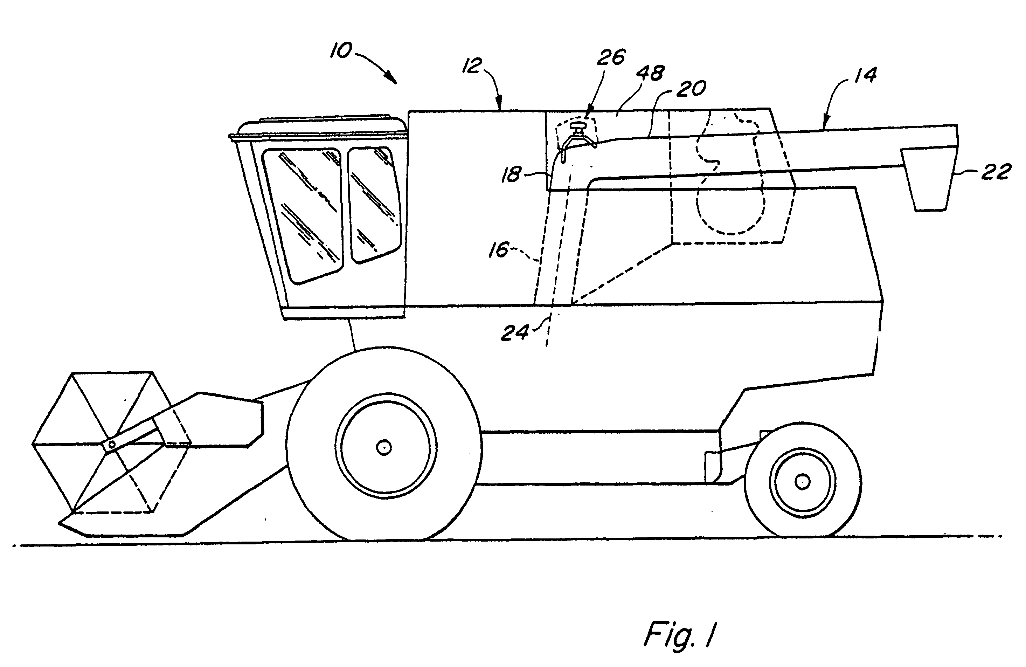

Konventionelle Entladerohre sind eingerichtet, um die Mittelachse des unteren Abschnitts des Entladerohrs zwischen zwei Positionen verschwenkt zu werden. In einer ersten Position ist der obere Abschnitt des Entladerohrs im Wesentlichen längs zur Fahrtrichtung des Fahrzeugs orientiert und in geringem Abstand entlang der Seite des Fahrzeugs angeordnet, wie in Figur 1 dargestellt. Das Entladerohr kann um die Mittelachse des unteren Abschnitts von dieser Position nach außen in eine Position geschwenkt werden, in der sich der obere Abschnitt des Entladerohrs von der Seite des Mähdreschers in Wesentlichen seitlich nach außen erstreckt. Das äußere Ende des Entladerohrs ist relativ hoch in der Luft angeordnet, so dass ein Anhänger oder Lastwagen unter dem Ende des Entladerohrs positioniert werden kann, um das vom Entladerohr ausgestoßene Korn aufzunehmen.

Die Entladerohre tendieren dahin, relativ schwer aufgebaut zu sein, da sie die Schneckenförderer beinhalten und ein großes Gewicht aufnehmen, wenn sie während des Entladebetriebs große Getreidemengen aufnehmen. Die Entladerohre müssen daher abgestützt werden, um diesen Kräften während des Betriebs standhalten zu können. Der untere Abschnitt der Entladerohre wird durch eine kräftige Tragringstruktur fest in seiner Position gehalten, welche den unteren Abschnitt des Entladerohrs abstützt und dem Entladerohr das Drehen ermöglicht. Konventionelle Mähdrescher weisen typischerweise auch eine obere Abstützeinrichtung oberhalb des unteren Abschnitts des Entladerohrs auf. Die obere Abstützeinrichtung hilft dabei, den unteren Abschnitt des Entladerohrs im Wesentlichen senkrecht zu halten und unterstützt den unteren Abschnitt dabei, nicht wegen des Gewichts des Entladerohrs, der Schneckenförderer und des Korns im Entladerohr umzukippen.

Ein Typ konventioneller oberer Trägermechanismen umfasst ein Stiftelement, das näherungsweise mit der Achse des unteren Abschnitts des Entladerohrs ausgerichtet ist. Das Stiftelement wird in einer an der Seite des Mähdreschers befestigten Rohrstruktur aufgenommen. Der untere Abschnitt des Entladerohrs ist unter relativ engen Toleranzen hergestellt und zusammengebaut, so dass das Stiftelement relativ genau zur Achse des unteren Abschnitts des Entladerohrs ausgerichtet ist. Auch sind die Rohrstruktur und die Halterungen, die sie an Ort und Stelle halten, mit relativ geringen Toleranzen hergestellt und zusammengebaut, so dass die Achse der Rohrstruktur in relativ genauer Ausrichtung mit der Achse des Stiftelements gehalten wird. Die Herstellungs- und Zusammenbauprozesse aller dieser Teile, die mit geringen Toleranzen erfolgen müssen, sind relativ kosten- und zeitaufwändig und steigern die Komplexität und Kosten des Mähdreschers.

Ein anderer Typ konventioneller oberer Trägermechanismen umfasst ein Metallstiftelement, das im Wesentlichen mit der Achse des unteren Abschnitts des Entladerohrs ausgerichtet ist. Der untere Abschnitt des Entladerohrs wird nicht unter engen Toleranzen hergestellt und zusammengebaut, so dass das Metallstiftelement geringfügig gegenüber der Achse des unteren Abschnitts des Entladerohrs versetzt sein kann. Diese Fehlausrichtung kann bedingen, dass das Metallstiftelement sich in verschiedene Richtungen verschiebt, wenn das Entladerohr zwischen seinen zwei Positionen verschwenkt wird. Das Metallstiftelement wird in einem Metalllagerungselement aufgenommen, das in einem Metallgehäuse gehaltert ist. Das Metalllagerungselement ist im Metallgehäuse frei schwenkbar, und das Metallstiftelement kann frei innerhalb des Metalllagerungselement nach oben und unten gleiten. Daher wird eine Fehlausrichtung des Metallstiftelements und des Metalllagerungselements aus der exakten Achse des unteren Abschnitts des Entladerohrs durch die Bewegungsfreiheit des Metallstifts gegenüber dem Metallgehäuse kompensiert. Dieser Typ einer oberen Abstützeinrichtung ist relativ preiswert herstell- und zusammenbaubar, da er nicht unter engen Toleranzen hergestellt wird. Jedoch schwenkt das Metalllagerungselement im Kontakt mit dem Metallgehäuse und das Metallstiftelement gleitet im Kontakt mit dem Metalllagerungselement, so dass die Abstützung eine Schmierung benötigt, um übermäßige Abnutzung zu vermeiden. Dieser Typ einer oberen Abstützeinrichtung erfordert daher regelmäßige Wartung, damit die Lageroberflächen innerhalb der Abstützeinrichtung mit Schmiermittel versorgt werden können.

Die der Erfindung zugrunde liegende Aufgabe wird darin gesehen, eine verbesserte obere Abstützeinrichtung bereitzustellen, die das Aufrechterhalten eines Entladerohrs eines Mähdreschers in dessen aufrechter Position während des Betriebs, beispielsweise wenn es mit Korn gefüllt ist, unterstützt und bei dem die Einhaltung exakter Toleranzen beim Fertigungs- und Montageprozess nicht erforderlich sind.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Erfindung schlägt eine obere Abstützeinrichtung für ein Entladerohr eines Mähdreschers vor, bei dem eine Kugelkopflagerung am oberen Bereich des unteren Abschnitts des Entladerohrs angeordnet ist. Eine Kugel ist innerhalb eines zumindest etwa kugelförmigen Lagerelements angeordnet, welches seinerseits in einer Öffnung in einer Hülse verschiebbar angeordnet ist. Vorzugsweise ist die Kugel mit dem oberen Bereich des unteren Abschnitts des Entladerohrs und die Hülse mit dem Fahrzeug verbunden, obwohl auch die umkehrte Anordnung, bei der die Kugel mit dem Fahrzeug und der obere Bereich des unteren Abschnitts mit der Hülse verbunden ist, denkbar wäre. Das Lagerelement gleitet in der Öffnung der Hülse nach oben und unten, wobei die Verschieberichtung wegen der Verwendung der Kugelkopflagerung nicht unbedingt exakt vertikal sein muss. Die Öffnung in der Hülse ist aus Gründen der einfacheren Herstellung vorzugsweise kreiszylindrisch, es wäre aber - da das Lagerelement sich in der Hülse nicht unbedingt drehen muss - auch eine beliebige andere Form denkbar, solange sie ein Verschieben des Lagerelements in der Hülse erlaubt. Die von der Kugel und dem Lagerelement ermöglichte Schwenkbewegung und die von der Lagerung relativ zur Hülse ermöglichte Verschiebebewegung nach oben und unten gleichen die Bewegung des Entladerohrs aus, die dadurch bedingt sein kann, dass die obere Abstützeinrichtung geringfügig gegenüber der Schwenkachse des Entladerohrs versetzt ist.

Auf diese Weise erreicht man, dass das Entladerohr und die Abstützeinrichtung mit weniger exakten Toleranzen gefertigt werden können, was die Fertigung vereinfacht und die Herstellungskosten reduziert.

Das Lagerelement kann aus einem Material sein, wie Polyethylen mit ultrahohem Molekulargewicht, das sich verschleißfrei entlang einer glatten Metalloberfläche bewegen kann, ohne dass grundsätzlich eine Schmierung erforderlich wäre. Ein derartiges erfindungsgemäßes Lagerelement erfordert somit weder Schmierung zwischen den Kontaktoberflächen der Kugel und der kugelförmigen Öffnung im Lagerelement noch zwischen den Kontaktoberflächen des Lagerelements und der es aufnehmenden Öffnung in der Hülse. Deshalb sind routinemäßige Wartungsarbeiten zur regelmäßigen Schmierung der oberen Abstützeinrichtung im wesentlichen vermeidbar.

Das Lagerelement ist vorzugsweise aus zwei Hälften hergestellt, die beim Zusammenbau bündig um die Kugel herum passen. Das Design der zwei Hälften erlaubt, die Teile des Lagerelements in relativ einfachen und kosteneffektiven Herstellungsprozessen zu erschaffen. Wenn die beiden Hälften zusammengefügt und beispielsweise durch eine Einschnappverbindung aneinander befestigt werden, bilden sie die kugelförmige Öffnung in der Mitte des Lagerelements, in der die Kugel im Betrieb schwenkbar und drehbar aufgenommen ist. An den beiden Hälften (vorzugsweise einteilig) geformte Stifte und dazu passende Öffnungen halten die zwei Teile zusammen, wenn sie um die Kugel gelegt werden. Die Oberfläche der Öffnung der Hülse hält während des Betriebs die zwei Teile des Lagerelements aneinander und in der Hülse fest.

In den Zeichnungen ist ein nachfolgend näher beschriebenes Ausführungsbeispiel der Erfindung dargestellt. Es zeigt:
- Fig. 1: eine schematische Seitenansicht eines Mähdreschers, wie er zum Ernten und Dreschen von Erntegut verwendet wird,

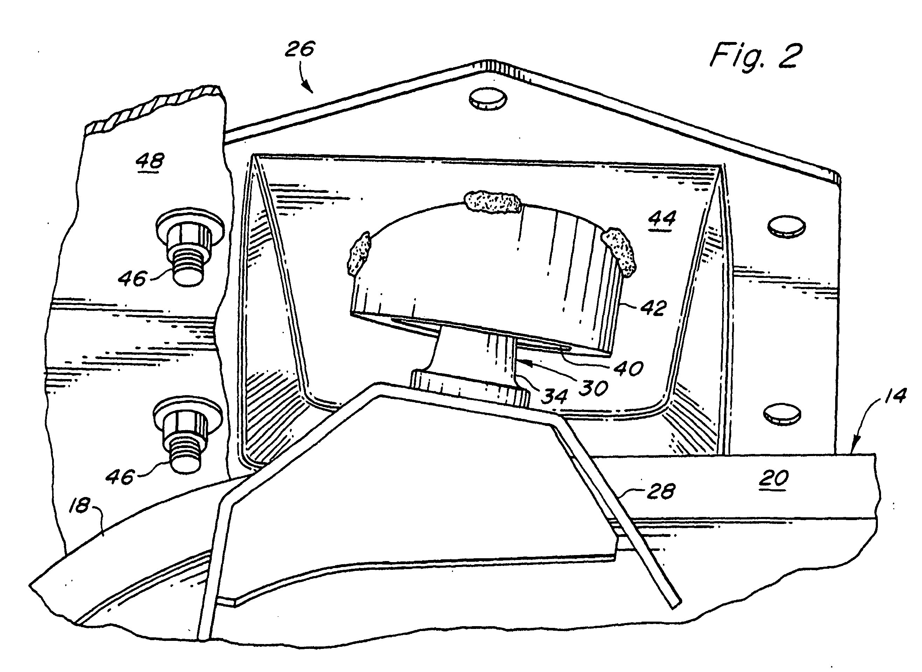

- Fig. 2: eine Seitenansicht einer erfindungsgemäßen oberen Abstützeinrichtung, die das Entladerohr stützt,

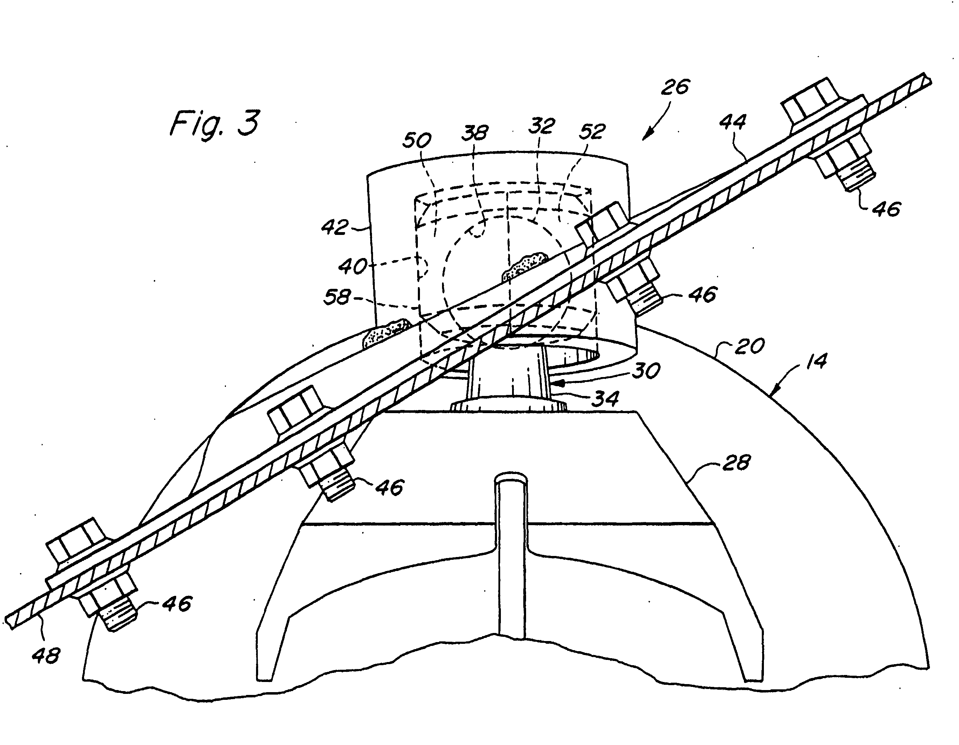

- Fig. 3: eine Vorderansicht der in Figur 2 gezeigten oberen Abstützeinrichtung,

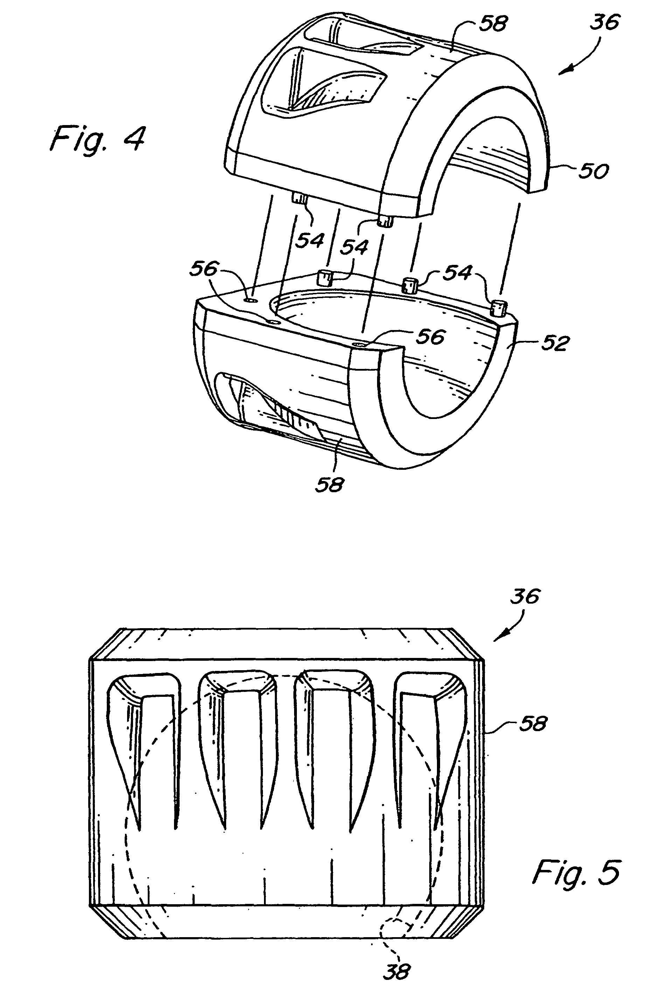

- Fig. 4: eine Ansicht der zwei Hälften einer erfindungsgemäßen Lagerung, und
- Fig. 5: eine Ansicht der zwei Hälften der Lagerung aus Figur 4 im zusammengebauten Zustand.

In Figur 1 ist eine Seitenansicht eines Mähdreschers 10 gezeigt, der zum Ernten und Dreschen von Erntegut, das Korn enthält, eingerichtet ist. Der Mähdrescher 10 umfasst einen Kornbehälter 12, dem gedroschenes Korn zugeführt wird. Ein Entladerohr 14 ist bereitgestellt, durch das Korn aus dem Kornbehälter 12 gefördert wird, um den Inhalt des Kornbehälters 12 auf einen Anhänger oder Lastwagen zu entleeren, der sich neben dem Mähdrescher 10 befindet. Das Entladerohr 14 umfasst einen im Wesentlichen vertikalen unteren Abschnitt 16, der mit einem Bodenabschnitt des Kornbehälters 12 des Mähdreschers 10 in Wirkverbindung steht. Korn aus dem Kornbehälter 12 wird in den unteren Abschnitt 16 des Entladerohrs 14 gefördert und durch einen im unteren Abschnitt 16 des Entladerohrs 14 angeordneten Schneckenförderer darin nach oben gefördert. Das Entladerohr 14 hat am oberen Ende des unteren Abschnitts 16 einen abgewinkelten Abschnitt 18. Ein oberer Abschnitt 20 des Entladerohrs 14 ist mit dem abgewinkelten Abschnitt 18 verbunden und erstreckt sich im Wesentlichen horizontal, wenn es nahe an der Seite des Mähdreschers 10 angeordnet ist. Ein Getriebe innerhalb des abgewinkelten Abschnitts 18 überträgt Rotationsenergie vom Schneckenförderer im unteren Abschnitt 14 auf einen Schneckenförderer im oberen Abschnitt 20 des Entladerohrs 14.

Das Entladerohr 14 ist aus der in Figur 1 gezeigten Position, in der der obere Abschnitt 20 nahe der Seite des Mähdreschers 10 angeordnet ist, in eine Position schwenkbar, in der sich der obere Abschnitt 20 vom Mähdrescher 10 seitlich nach außen erstreckt. Wenn das Entladerohr 14 nach außen verschenkt wird, schwingt das äußere Ende 22 des Entladerohrs 14 geringfügig nach oben, da die Achse 24 des unteren Abschnitts 16, um den das Entladerohr 14 verschwenkt, einen kleinen Winkel mit der realen Vertikalen einschließt. Dadurch wird es möglich, das Ende 22 des Entladerohrs 14 während des Entladevorgangs oberhalb großen Anhängern oder Lastwagen zu positionieren.

Wegen des Gewichts des Entladerohrs 14, der Schneckenförderer und des im Entladerohr 14 enthaltenen Korns ist das Entladerohr 14 relativ schwer. Um aus diesem hohen Gewichtsbetrag entstehenden Kräften und Drehmomenten widerstehen zu können, ist das Entladerohr 14 mit oberen und unteren Stützmechanismen ausgestattet. Am unteren Ende des unteren Abschnitts 16 des Entladerohrs 14 ist ein (nicht gezeigter) unterer oder Ringstützmechanismus, der einen großen Anteil des Gewichts des Entladerohrs 14 während des Betriebs trägt und dem unteren Abschnitt 16 des Entladerohrs 14 ermöglicht, um seine Achse zu schwenken. Außerdem ist etwa direkt oberhalb des unteren Abschnitts 16 des Entladerohrs 14 eine erfindungsgemäße obere Abstützeinrichtung 26 bereitgestellt. Die obere Abstützeinrichtung 26 hilft dabei, den unteren Abschnitt 16 des Entladerohrs 14 in seiner Position zu halten, wenn das Entladerohr 14 verschwenkt wird, und verhindert, dass das Gewicht des Entladerohrs 14 letzteres umkippt.

Die obere Abstützeinrichtung 26 umfasst eine Halterung (Konsole) 28, die beispielsweise durch Schweißnähte am Entladerohr 14 befestigt ist. An die obere Oberfläche der Halterung 28 ist ein Kugelmechanismus 30 geschweißt, der ein im Wesentlichen kugelförmiges Element 32 umfasst, das an einem senkrechten Achsabschnitt 34 befestigt ist. Das kugelförmige Element 32 ist innerhalb eines Lagerelements 36 angeordnet, das aus Polyethylenmaterial mit ultrahohem Molekulargewicht hergestellt ist. Das Lagerelement 36 ist aus zwei Hälften geformt, die zusammenpassen, um eine im Wesentlichen kugelförmige Öffnung 38 zu definieren, innerhalb der der Kugelmechanismus 30 während des Betriebs angeordnet ist. Das Lagerelement 36 ist innerhalb einer im Wesentlichen zylindrischen Öffnung 40 in einer metallischen Hülse 42 oder einem Zapfen angeordnet. Das Lagerelement 36 passt bündig in die Öffnung 40 in der Hülse 42, ist aber mit hinreichend Spiel ausgestattet, um es dem Lagerelement 36 zu ermöglichen, innerhalb der Hülse 42 nach unten und oben zu gleiten. Die Hülse 42 ist beispielsweise durch Schweißnähte an einer Platte 44 befestigt, die durch Schrauben 46 an einer abgewinkelten Wand 48 an der Seite des Mähdreschers 10 befestigt ist.

Der Kugelmechanismus 30 kann innerhalb der kugelförmigen Öffnung 38 im Lagerelement 36 schwenken und das Lagerelement 36 kann sich in der zylindrischen Öffnung 40 in der Hülse 42 nach oben und unten verschieben (gleiten). Das ermöglicht der erfindungsgemäßen oberen Abstützeinrichtung 26, die mit einer ungenauen Positionierung der oberen Abstützeinrichtung 26 relativ zur Achse 24 des unteren Abschnitts 16 des Entladerohrs 14 verbundene Bewegung aufzunehmen. Daher können das Entladerohr 14 und die obere Abstützeinrichtung 26 im Wesentlichen ohne exakte Toleranzen hergestellt werden, wodurch die Komplexität und die Kosten der Anordnung entsprechend vermindert werden.

Das Lagerelement 36 ist aus Material mit ultrahohem Molekulargewicht hergestellt, das im Kontakt mit der inneren Oberfläche der zylindrischen Öffnung 40 in der Hülse 42 entlang schleifen kann, ohne dass eine Schmierung notwendig wäre. Das Lagerelement 36 und die Hülse 42 werden daher nicht zu Verschleiß, Abnutzung durch Reibung oder Überhitzung neigen, so dass sich eine regelmäßige Schmierung der Abstützeinrichtung 26 erübrigt. In ähnlicher Weise erlaubt das Material des Lagerelements 36 dem Kugelmechanismus 30, im Kontakt mit der kugelförmigen Öffnung 38, die in der Hülse 36 bereitgestellt ist, zu schleifen, ohne dass eine Schmierung dieser Oberflächen erforderlich wäre. Dadurch ist die Notwendigkeit, diese Kontaktoberflächen regelmäßig zu schmieren, vermieden. Andere Materialien, die keine Schmierung erfordern würden, könnten ebenfalls verwendet werden, wie bestimmte Kunststoffe, Nylon, Messing oder Bronze.

Das Lagerelement 36 ist aus zwei Hälften 50, 52 hergestellt, die während des Zusammenbauens um den kugelförmigen Abschnitt 32 herum gelegt und miteinander durch eine Einschnappverbindung verrastet werden. Sätze von Stiften 54 und dazu passenden Öffnungen 56 passen zusammen, um die zwei Hälften 50, 52 des Lagerelements zusammenzuhalten. Der innere Durchmesser der zylindrischen Öffnung 40 in der Hülse 42 liegt fast an der äußeren, im Wesentlichen kreiszylindrischen Oberfläche 58 des zusammengebauten Lagerelements 36 an, so dass die Öffnung 40 dazu dient, die zwei Hälften 50, 52 des Lagerelements 36 während des Betriebs in Anlage zu halten, wodurch die Hälften 50, 52 ebenfalls aneinander gehalten werden. Dieses Design ist relativ einfachen Aufbaus und funktioniert effektiv bei der Bereitstellung einer Lageroberfläche für das kugelförmige Element 32 und ist auch unschwer herstell- und zusammenbaubar.

Als Kugelmechanismus 30 kann eine konventionelle Kugelkopfkupplung verwendet werden, wie sie an Fahrzeugen befestigt werden, die Anhänger ziehen. Viele konventionelle Kugelkopfkupplungen umfassen einen Chromüberzug und einen mit Gewinde ausgestatteten unteren Abschnitt. Der erfindungsgemäße Kugelmechanismus 30 muss keinen Chromüberzug und kein Gewinde am unteren Abschnitt aufweisen.

## Patentansprüche

1. Abstützeinrichtung (26) eines Entladerohrs (14) eines Fahrzeugs, insbesondere Mähdreschers (10), wobei das Fahrzeug einen Kornbehälter (12) und ein Entladerohr (14) aufweist, das einen mit dem Kornbehälter in Wirkverbindung stehenden, zumindest etwa vertikal orientierten unteren Abschnitt (16) und einen mit einem oberen Bereich des unteren Abschnitts (16) in Wirkverbindung stehenden oberen Abschnitt (20) umfasst, wobei das Entladerohr (14) um die Längsachse des unteren Abschnitts (16) schwenkbar und die Abstützeinrichtung (26) zwischen dem Fahrzeug und dem oberen Bereich des unteren Abschnitts (16) vorgesehen ist, **dadurch gekennzeichnet, dass** die Abstützeinrichtung (26) ein kugelförmiges Element (32), ein Lagerelement (36) mit einer kugelförmigen Öffnung (38), in der das kugelförmige Element (32) drehbar angeordnet ist, und eine Hülse (42) mit einer Öffnung (40) umfasst, in der das Lagerelement (36) in vertikaler Richtung verschiebbar angeordnet ist, wobei das kugelförmige Element (32) mit dem unteren Abschnitt (16) und die Hülse (42) mit dem Fahrzeug verbunden ist, bzw. umgekehrt.

2. Abstützeinrichtung (26) nach Anspruch 1, **dadurch gekennzeichnet, dass** die Verschieberichtung des Lagerelements (32) in der Hülse (42) parallel zur Längsachse des unteren Abschnitts (16) verläuft.

3. Abstützeinrichtung (26) nach Anspruch 1 oder 2, **dadurch gekennzeichnet, dass** das kugelförmige Element (32) auf der Achse des unteren Abschnitts (16) angeordnet und um die Mitte der kugelförmigen Öffnung (38) drehbar ist.

4. Abstützeinrichtung (26) nach einem der Ansprüche 1 bis 3, **dadurch gekennzeichnet, dass** das Lagerelement (36) aus einem Material ist, das bei fehlender Schmierung zumindest im Wesentlichen abnutzungsresistent ist.

5. Abstützeinrichtung (26) nach Anspruch 4, **dadurch gekennzeichnet, dass** das Lagerelement (36) aus Material mit ultrahohem Molekulargewicht ist.

6. Abstützeinrichtung (26) nach einem der Ansprüche 1 bis 5, **dadurch gekennzeichnet, dass** das Lagerelement (36) aus einer Mehrzahl von zusammenpassenden Teilen (50, 52) aufgebaut ist, die bei der Fertigung zusammengefügt werden und die kugelförmige Öffnung (38) um das kugelförmige Element (32) bilden, und die durch die Hülse (42) zusammengehalten werden.

7. Abstützeinrichtung (26) nach Anspruch 6, **dadurch gekennzeichnet, dass** die Teile (50, 52) des Lagerelements (32) durch Stifte (54), die in dazu passende Öffnungen (56) gesteckt sind, zusammengehalten werden, insbesondere bevor das Lagerelement (32) in die Hülse (42) eingesetzt wird.

8. Fahrzeug, insbesondere Mähdrescher (10) mit einem Abstützeinrichtung (26) nach einem der vorhergehenden Ansprüche.

## Claims

1. A support device (26) of a discharge pipe (14) of a vehicle, especially a combine harvester (10), wherein the vehicle comprises a grain tank (12) and a discharge pipe (14) which comprises an at least approximately vertically orientated lower section (16) in operative communication with the grain tank and an upper section (20) in operative communication with an upper region of the lower section (16), wherein the discharge pipe (14) can turn about the longitudinal axis of the lower section (16) and the support device (26) is provided between the vehicle and the upper region of the lower section (16), **characterized in that** the support device (26) comprises a ball-shaped element (32), a bearing element (36) with a ball-shaped opening (38), in which the ball-shaped element (32) is rotatably arranged, and a sleeve (42) with an opening (40) in which the bearing element (36) is arranged slidably in the vertical direction, wherein the ball-shaped element (32) is connected to the lower section (16) and the sleeve is connected to the vehicle or vice versa.

2. A support device (26) according to claim 1, **characterized in that** the direction of displacement of the bearing element (32) in the sleeve (42) runs parallel to the longitudinal axis of the lower section (16).

3. A support device (26) according to claim 1 or 2, **characterized in that** the ball-shaped element (32) is arranged on the axis of the lower section (16) and can turn about the centre of the ball-shaped opening (38).

4. A support device (26) according to any of claims 1 to 3, **characterized in that** the bearing element (36) is of a material which is substantially resistant to wear in the absence of lubrication.

5. A support device (26) according to claim 4, **characterized in that** the bearing element (36) is of material with ultra-high molecular weight.

6. A support device (26) according to any of claims 1 to 5, **characterized in that** the bearing element (36) is built up of a plurality of mating parts (50, 52) which are joined together during manufacture and form the ball-shaped opening (38) around the ball-shaped element (32) and which are held together by the sleeve (42).

7. A support device (26) according to claim 6, **characterized in that** the parts (50, 52) of the bearing element (32) are held together by pins (54) which are inserted in matching openings (56), in particular before the bearing element (32) is inserted into the sleeve (42).

8. A vehicle, especially a combine harvester (10) with a support device (26) according to any of the preceding claims.

## Revendications

1. Dispositif de support (26) pour un tube de vidange (14) d'un véhicule, en particulier d'une moissonneuse-batteuse (10), du type dans lequel le véhicule comporte un conteneur de grain (12) et un tube de vidange (14), et qui se compose d'une section inférieure (16), orientée au moins sensiblement verticalement et en relation fonctionnelle avec le conteneur, et d'une section supérieure (20) en relation fonctionnelle avec une zone supérieure de la section inférieure (16), le tube de vidange (14) pouvant pivoter autour de l'axe longitudinal de la section inférieure (16), et le dispositif de support (26) étant prévu entre le véhicule et la région supérieure de la section inférieure (16), **caractérisé en ce que** le dispositif de support (26) comporte un élément en forme de boule (32) et un élément formant palier (36) présentant une ouverture de forme sphérique (38), dans laquelle est monté rotatif l'élément en forme de boule (32), ainsi qu'une douille (42) présentant une ouverture (40), dans laquelle est monté coulissant en direction verticale l'élément en forme de palier (36), l'élément en forme de boule (32) étant relié à la section inférieure (16) et la douille (42) étant relié au véhicule, ou inversement.

2. Dispositif de support selon la revendication 1, **caractérisé en ce que** la direction de coulissement de l'élément formant palier (32) dans la douille (42) est parallèle à l'axe longitudinal de la section inférieure (16).

3. Dispositif de support selon l'une ou l'autre des revendications 1 ou 2, **caractérisé en ce que** l'élément en forme de boule (32) est monté sur l'axe de la section inférieure (16), et peut pivoter autour du centre de l'ouverture sphérique (38).

4. Dispositif de support selon l'une quelconque des revendications 1 à 3, **caractérisé en ce que** l'élément formant palier (36) est réalisé en un matériau qui, en cas de défaillance de la lubrification, est au moins en grande partie résistant à l'usure.

5. Dispositif de support selon la revendication 4, **caractérisé en ce que** l'élément formant palier (36) est réalisé en un matériau à poids moléculaire ultra élevé.

6. Dispositif de support selon l'une quelconque des revendications 1 à 5, **caractérisé en ce que** l'élément formant palier (36) est constitué par une pluralité de portions s'adaptant les unes aux autres (50,52) qui sont assemblées au moment de la fabrication et qui créent l'ouverture sphérique (38) autour de l'élément en forme de boule (32), et qui sont maintenus ensemble par la douille (42).

7. Dispositif de support selon la revendication 6, **caractérisé en ce que** les portions (50, 52) de l'élément formant palier (32) sont maintenues ensemble par des chevilles (54) qui sont insérées dans des ouvertures (56) qui leur correspondent, en particulier avant que l'élément formant palier (32) ne soit introduit dans la douille (42).

8. Véhicule, en particulier moissonneuse-batteuse (10), comportant un dispositif de support selon l'une quelconque des revendications précédentes.
